(19) Europäisches Patentamt
European Patent Office
Office européen des brevets

(11) **EP 4 034 596 B1**

(12) **EUROPEAN PATENT SPECIFICATION**

(45) Date of publication and mention
of the grant of the patent:
**18.10.2023 Bulletin 2023/42**

(21) Application number: **20765282.7**

(22) Date of filing: **04.09.2020**

(51) International Patent Classification (IPC):
**C08L 23/12** (2006.01)     **C09D 123/12** (2006.01)
**F16L 13/02** (2006.01)

(52) Cooperative Patent Classification (CPC):
(C-Sets available)
**C09D 123/12; C08L 23/12;** C08L 2205/025;
C08L 2205/035; C08L 2207/02     (Cont.)

(86) International application number:
**PCT/EP2020/074772**

(87) International publication number:
**WO 2021/058264 (01.04.2021 Gazette 2021/13)**

(54) **PROPYLENE-BASED COMPOSITION FOR PIPES**

PROPYLENBASIERTE ZUSAMMENSETZUNG FÜR ROHRE

COMPOSITION À BASE DE PROPYLÈNE POUR TUBES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.09.2019 EP 19198959**

(43) Date of publication of application:
**03.08.2022 Bulletin 2022/31**

(73) Proprietor: **Basell Poliolefine Italia S.r.l.
20121 Milano (IT)**

(72) Inventors:
• **COMERFORD, Sean
Talbot Neath, South Wales SA11 1AQ (GB)**
• **GALVAN, Monica
44122 Ferrara (IT)**
• **PELLEGATTI, Giampaolo
44122 Ferrara (IT)**
• **TISI, Francesca
44122 Ferrara (IT)**

(74) Representative: **LyondellBasell
c/o Basell Poliolefine Italia
Intellectual Property
P.le Donegani 12
44122 Ferrara (IT)**

(56) References cited:
**EP-A1- 2 589 623        EP-A2- 0 330 315
WO-A1-2015/090594    WO-A1-2017/071847**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/12, C08L 23/12, C08L 23/0815,
C08L 23/16, C08L 23/16, C08L 23/14;
C09D 123/12, C08L 23/12, C08L 23/0815,
C08L 23/16, C08L 23/16, C08L 23/14**

**Description**

FIELD OF THE INVENTION

The present disclosure relates to a polyolefin composition comprising two heterophasic polyolefin polymers. Also, the present disclosure provides coatings of pipes and field joint coatings of pipes comprising the polyolefin composition.

BACKGROUND OF THE INVENTION

Pipelines are used in the oil and gas industry for the transportation of hydrocarbons. When hydrocarbon deposits are found under the sea floor, pipelines are often laid on the sea floor for transporting the hydrocarbons to a storage or production facility.

To produce a pipeline, the pipe ends of the pipe sections are joined together, generally by welding. Other joining techniques may be used. The pipe sections are joined at a pipe joint, such that the coating end faces of the pipe sections are located at opposite sides of the pipe joint.

After the joining of the pipe sections, the pipe ends and the pipe joint need to be covered by a joint coating. The joint coating should bond with the factory applied pipe coating, in order to protect the pipe during its working lifetime on the seafloor. The pipe sections are joined together in the field before the pipes are installed in the sea, either as risers between the seafloor and the surface, or laid on the seabed. The coating of the pipe joints is therefore performed in the field. The coating of the joint is generally referred to as a field joint coating in the field of the art.

Pipe coatings and field joint coatings are used to protect the pipe from the seawater which can cause corrosion. The coatings may provide mechanical protection as well.

Pipe coatings also need to withstand the hydrostatic pressure experienced at a water depth. Good mechanical properties are therefore also required.

Several materials are used currently in the industry for the pipe coating, and/or insulation and/or field joint coating. Materials that may be used for these purposes are polyolefins such as polypropylene (PP) or polyethylene (PE) and polyurethane (PU) including glass syntactic polyurethane (GSPU).

A common technique used for the production of the joint coating is injection moulding of polymers, such as Injection Moulded Polypropylene (IMPP).

The opposite coating end faces of the two joined pipeline units are heated, and the pipe joint is enclosed with a mould that defines a cavity between the uncoated pipe ends and the pipe joint, the two opposite coating end faces of the pipeline units and the mould. Molten polypropylene is then injected into the cavity, under pressure, where it cools and solidifies. A layer of an anticorrosion agent such as a type of epoxy may be provided on the uncoated pipe ends and the pipe joint, as well as an adhesion promoter, before the joint coating (for example IMPP) is applied.

WO2015/090594 describes a heterophasic polypropylene composition to be used as a coating or field joint coatings of pipes and comprising two heterophasic polypropylene based polymers and a reactive masterbatch. Such composition comprises a propylene random copolymer matrix phase and ethylene-propylene copolymer rubber phase and has a melt flow rate (2.16 Kg, 230 °C) ranging from 3.0 to 7.0 g/10min.

Due to the production technique and to the final use as field joint coating, melt flow rate and mechanical properties of the polypropylene are of most importance. A composition with low melt flow rate can be difficult to be used in joint coating of pipes and low Charpy impact properties do not ensure adequate protection of the field joint during transportation, installation and the entire service life of the pipeline.

The applicant has now found a polyolefin composition suitable to be used for joint coating showing improved impact properties.

SUMMARY OF THE INVENTION

The applicant found a polyolefin composition comprising:

from 2 wt% to 40 wt% of a first heterophasic polyolefin polymer A) comprising:

- a1) a crystalline propylene homopolymer matrix,
- a2) a propylene ethylene copolymer having an ethylene content ranging from 20.0 wt% up to 35.0 wt%,
- a3) a propylene ethylene copolymer having an ethylene content ranging from 55.0 wt% up to 70.0 wt%,

said first heterophasic polyolefin polymer A) having xylene soluble content measured according to ISO 16152, 2005 ranging from 20.0 wt% to 40.0 wt% and intrinsic viscosity of the xylene soluble fraction at 25 °C ranging from 3.0 dl/g to 4.0 dl/g,
and from 60 wt% to 98 wt% of a second heterophasic polyolefin polymer B) comprising:

- b1) a crystalline propylene homopolymer matrix,
- b2) an ethylene $C_4$-$C_{10}$ $\alpha$-olefin copolymer having an ethylene content ranging from 65.0 wt% up to 85.0 wt%,
- b3) a propylene ethylene copolymer having an ethylene content ranging from 40.0 wt% up to 50.0 wt%,

said second heterophasic polyolefin polymer B) having xylene soluble content measured according to ISO 16152, 2005 ranging from 25.0 wt% to 45.0 wt% and intrinsic viscosity of the xylene soluble fraction at 25 °C ranging from 1.5 dl/g to 2.8 dl/g,
the sum A) + B) being 100.

The present disclosure also pertains to the use of such polyolefin composition for field joint coatings of pipes.

Further, the present disclosure provides a process for the production of a joint coating comprising such composition.

DETAILED DESCRIPTION OF THE INVENTION

A polyolefin composition comprising:

from 2 wt% to 40 wt%, preferably from 5 wt% to 25 wt%, more preferably from 5 wt% to 20 wt%, of a first heterophasic polyolefin polymer A) comprising:

- a1) a crystalline propylene homopolymer matrix,
- a2) a propylene ethylene copolymer having an ethylene content ranging from 20.0 wt% up to 35.0 wt%,
- a3) a propylene ethylene copolymer having an ethylene content ranging from 55.0 wt% up to 70.0 wt%,

said first heterophasic polyolefin polymer A) having xylene soluble content measured according to ISO 16152, 2005 ranging from 20.0 wt% to 40.0 wt% and intrinsic viscosity of the xylene soluble fraction at 25 °C ranging from 3.0 dl/g to 4.0 dl/g,
and from 60 wt% to 98 wt%, preferably from 75 wt% to 95 wt%, more preferably from 80 wt% to 95 wt%, of a second heterophasic polyolefin polymer B) comprising:

- b1) a crystalline propylene homopolymer matrix,
- b2) an ethylene $C_4$-$C_{10}$ $\alpha$-olefin copolymer having an ethylene content ranging from 65.0 wt% up to 85.0 wt%,
- b3) a propylene ethylene copolymer having an ethylene content ranging from 40.0 wt% up to 50.0 wt%,

said second heterophasic polyolefin polymer B) having xylene soluble content measured according to ISO 16152, 2005 ranging from 25.0 wt% to 45.0 wt% and intrinsic viscosity of the xylene soluble fraction at 25 °C ranging from 1.5 dl/g to 2.8 dl/g,
the sum A) + B) being 100.

Preferably, the polyolefin composition has a MFR (23 °C/5kg ISO 1133) ranging from 5.0 to 30.0 g/10 min, more preferably from 8.0 to 15.0 g/10 min.

The expression "heterophasic polymer" as used in the instant disclosure indicates that the elastomeric polyolefin copolymer is (finely) dispersed in the matrix, i.e. in the propylene homo or copolymer. In other words the elastomeric polyolefin copolymers forms inclusions in the matrix. Thus the matrix contains (finely) dispersed inclusions being not part of the matrix and said inclusions contain the elastomeric propylene copolymers. The term "inclusion" according to this disclosure shall preferably indicate that the matrix and the inclusion form different phases within the heterophasic system, said inclusions are for instance visible by high resolution microscopy, like electron microscopy or scanning force microscopy.

The matrix a1) has a fraction insoluble in xylene at 25 °C preferably higher than 90 wt%, more preferably higher than 95 wt%, even more preferably higher than 97 wt%.

The matrix b1) has a fraction insoluble in xylene at 25 °C preferably higher than 90 wt%, more preferably higher than 95 wt%, even more preferably higher than 97 wt%.

The term copolymer means that the polymer is formed by only two monomers, propylene and ethylene for components a2), a3) and b3), and ethylene and $C_4$-$C_{10}$ $\alpha$-olefin for component b2).

The $C_4$-$C_{10}$ $\alpha$-olefin copolymer b2) is preferably selected in the group consisting of 1-butene, 1-hexene and 1-octene, more preferably the α-olefin is 1-butene.

The term xylene soluble or xylene soluble fraction it is intended to be the fraction soluble in xylene at 25°C measured according to the procedure reported in the examples section.

Preferably, the polyolefin composition comprises from 5 wt% to 25 wt% of the first heterophasic polyolefin polymer A) and from 75 wt% to 95 wt% of the second heterophasic polyolefin polymer B, the sum A) + B) being 100, more preferably the polyolefin composition comprises from 5 wt% to 20 wt% of the first heterophasic polyolefin polymer A) and from 80 wt% to 95 wt% of the second heterophasic polyolefin polymer B, the sum A) + B) being 100.

Preferably, the first heterophasic polyolefin polymer A) comprises from 40 wt% to 80 wt%, of component a1), from 5 wt% to 30 wt% of component a2) and from 10 wt% to 50 wt% of component a3), more preferably from 50 wt% to 70 wt% of component a1), from 7 wt% to 20 wt% of component a2) and from 15 wt% to 40 wt% of component a3), the sum a1) + a2) + a3) being 100.

Preferably the second heterophasic polyolefin polymer B) comprises from 40 wt% to 80 wt%, of component b1), from 5 wt% to 40 wt% of component b2) and from 10 wt% to 40 wt% of component b3), more preferably from 50 wt% to 70 wt% of component b1), from 10 wt% to 30 wt% of component b2) and from 15 wt% to 30 wt% of component b3), the sum b1) + b2) + b3) being 100.

Preferably the first heterophasic polyolefin polymer A) has a MFR (230°C/5 kg ISO 1133) ranging from 0.5 g/10 min to 50.0 g/10 min, more preferably from 5.0 to 20.0 g/10 min, even more preferably from 5.0 to less than 10.0 g/10 min.

Preferably the second heterophasic polyolefin polymer B) has a MFR (230°C/5 kg ISO 1133) ranging from 0.5 g/10 min to 50.0 g/10 min, more preferably from 5.0 to 20.0 g/10 min, even more preferably from 10.0 to 15.0 g/10 min.

Preferably the first heterophasic polyolefin polymer A) has a Charpy impact strength (notched, ISO 179) at -20 °C ranging from 10 to 20 KJ/m$^2$.

Preferably the first heterophasic polyolefin polymer A) has a Charpy impact strength (notched, ISO 179) at 23 °C ranging from 55 to 75 KJ/m$^2$.

Preferably the second heterophasic polyolefin polymer B) has a Charpy impact strength (notched, ISO 179) at -20 °C ranging from 30 to 60 KJ/m$^2$.

Preferably the second heterophasic polyolefin polymer B) has a Charpy impact strength (notched, ISO 179) at 23 °C ranging from 30 to 60 KJ/m$^2$.

Preferably the first heterophasic polyolefin polymer A) has a Vicat softening point (A50, ISO 306) ranging from 125 to 145 °C.

Preferably the second heterophasic polyolefin polymer B) has a Vicat softening point (A50, ISO 306) at -20 °C ranging from 110 to 125 °C.

The heterophasic polyolefin polymers of the present disclosure are available on the market. Examples of such polymers are Hifax EP3080 and Hifax CA7201 A sold by LyondellBasell.

The polyolefin composition can be prepared by melt blending the two heterophasic polyolefin polymers A) and B) in an extruder.

The polyolefin composition object of the present disclosure can additionally contain additives art such as antioxidants, slipping agents, process stabilizers, antiacids and nucleants.

With the polyolefin composition of the present disclosure it is possible to obtain field joint coatings on pipes; thus, a further object of the present disclosure is the use of the composition of the present disclosure for field joint coating of pipes.

The term "pipe" as used herein also includes, but is not limited to pipe fittings, valves and all parts which are commonly necessary for e.g. a hot water piping system. Also included within the definition are single and multilayer pipes, where for example one or more of the layers is a metal layer and which may include an adhesive layer.

The following examples are given to illustrate the present disclosure without limiting purpose.

EXAMPLES

**Characterization methods**

Melting temperature and crystallization temperature: Determined by differential scanning calorimetry (DSC). weighting 6 ±1 mg, is heated to 220 ±1° C at a rate of 20 °C/min and kept at 220 ±1° C for 2 minutes in nitrogen stream and it is thereafter cooled at a rate of 20° C/min to 40 ±2° C, thereby kept at this temperature for 2 min to crystallise the sample. Then, the sample is again fused at a temperature rise rate of 20° C/min up to 220° C ±1. The melting scan is recorded, a thermogram is obtained, and, from this, melting temperatures and crystallization temperatures are read.

Melt Flow Rate: Determined according to the method ISO 1133-1 2011 (230° C, 2.16 kg).

Solubility in xylene: Determined as follows.

2.5 g of polymer and 250 ml of xylene are introduced in a glass flask equipped with a refrigerator and a magnetic stirrer. The temperature is raised in 30 minutes up to the boiling point of the solvent. The so obtained clear solution is then kept under reflux and stirring for further 30 minutes. The closed flask is then kept for 30 minutes in a bath of ice and water and in thermostatic water bath at 25° C for 30 minutes as well. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

Ethylene (C2) and 1-butene (C4) content

The content of comonomers was determined by infrared (IR) spectroscopy by collecting the IR spectrum of the sample vs. an air background with a Fourier transform infrared spectrometer (FTIR). The instrument data acquisition parameters were:

- purge time: 30 seconds minimum
- collect time: 3 minutes minimum
- apodization: Happ-Genzel
- resolution: 2 cm$^{-1}$.

Sample Preparation - Using a hydraulic press, a thick sheet was obtained by compression molding about 1 g of sample between two aluminum foil sheets. A small portion was cut from the resulting sheet to mold a film. The film thickness was set in order to have a maximum absorbance of the $CH_2$ absorption band at ~720 cm$^{-1}$ of 1.3 a.u. (% Transmittance > 5%). The molding conditions were carried out at a temperature of about 180 $\pm$ 10 °C (356 °F) and a pressure of about 10 kg/cm$^2$ (142.2 psi) for about one minute. The pressure was then released, the sample was removed from the press and cooled to room temperature. The spectrum of the pressed film sample was recorded as a function of absorbance vs. wavenumbers (cm$^{-1}$). The following measurements were used to calculate ethylene ($C_2$) and 1-butene ($C_4$) contents:

a) Area (At) of the combination absorption bands between 4482 and 3950 cm$^{-1}$, which is used for spectrometric normalization of film thickness.
b) Area ($A_{C2}$) of the absorption band due to methylenic sequences ($CH_2$ rocking vibration) in a range of 660-790 cm$^{-1}$ after a proper digital subtraction of an isotactic polypropylene (IPP) and a $C_2C_4$ references spectrum.
c) The factor of subtraction ($FCR_{C4}$) between the spectrum of the polymer sample and the $C_2C_4$ reference spectrum: The reference spectrum is obtained by performing a digital subtraction of a linear polyethylene from a $C_2C_4$ copolymer in order to extract the $C_4$ band (ethyl group at ~771 cm$^{-1}$).

The ratio $A_{C2}/A_t$ is calibrated by analyzing ethylene-propylene standard copolymers of known compositions, as determined by NMR spectroscopy.
In order to calculate the ethylene ($C_2$) and 1-butene ($C_4$) content, calibration curves were obtained by using samples of known amounts of ethylene and 1-butene that were detectable by $^{13}$C NMR.
Calibration for ethylene - A calibration curve was obtained by plotting $A_{C2}/A_t$ versus ethylene molar percent (%$C_{2m}$), and the coefficients $a_{C2}$, $b_{C2}$ and $c_{C2}$ were then calculated via linear regression.
Calibration for 1-butene - A calibration curve was obtained by plotting $FCR_{C4}/A_t$ versus butane molar percent (%$C_4$m), and the coefficients $a_{C4}$, $b_{C4}$ and $C_{C4}$ were then calculated via linear regression.
The spectra of the unknown samples are recorded and then ($A_t$), ($A_{C2}$) and ($FCR_{C4}$) of the unknown sample are calculated.
The ethylene content (% molar fraction $C_{2m}$) of the sample was calculated as follows:

$$\%C2m = -b_{C2} + \frac{\sqrt{b_{C2}^2 - 4 \cdot a_{C2} \cdot (c_{C2} - \frac{A_{C2}}{A_t})}}{2 \cdot a_{C2}}$$

The 1-butene content (% molar fraction $C_{4m}$) of the sample was calculated as follows:

$$\%C4m = -b_{C4} + \frac{\sqrt{b_{C4}^2 - 4 \cdot a_{C4} \cdot (c_{C4} - \frac{FCR_{C4}}{A_t})}}{2 \cdot a_{C4}}$$

where $a_{C4}$, $b_{C4}$, $c_{C4}$ $a_{C2}$, $b_{C2}$, $c_{C2}$ are the coefficients of the two calibrations.

Changes from mol% to wt% are calculated by using molecular weights of the compounds.

Intrinsic Viscosity

The intrinsic viscosity was determined in tetrahydronaphthalene at 135°C.

Tensile strength at yield, tensile strain at break elongation at break: determined according to ISO method 527-1, Type 1A on rectangular specimens (80 x 10 x 4 mm) from T-bars.

Flexural modulus: determined according to ISO method 178.

Charpy notched impact test: determined on V-notched samples (80 x 10 x 4 mm) according to ISO 179/1eA (2000) from T-bars.

T-bar preparation (injection molded): determined according to ISO 1873-2 (1989).

Vicat softening point: determined according to ISO 306 (2004) 1 Kg (9.81N).

**Examples**

All compositions described in the examples were produced with Werner WP40 twinscrew extruder (screw diameter: 2 x 53, 36D; screw rotation speed of 150 rpm; melt temperature of 230 °C).

Comparative Example 1

Comparative Example 1 is a commercial elastomer modified polypropylene (Borcoat EA165E, Borealis AG, MFR230° C, 2.16 kg 0.3 g/10min.

Comparative Example 2

Comparative Example 2 corresponds to IE2 of WO2015/090594.

Example 1

The composition was built up with:

- 87.6 wt% of a commercial polypropylene heterophasic copolymer PP heco 1 (Hifax CA 7201A, LyondellBasell Industries, MFR 230° C, 2.16 kg 12.0 g/10 min, xylene soluble content 35.0 wt%, intrinsic viscosity of the fraction soluble in xylene at 25°C 2.3 dl/g, ethylene content in b2) 73 wt%, ethylene content in b3) 45 wt%, split b1)/b2)/b3) 56/23/21), α-olefin: 1-butene,
- 7.0 wt% of a commercial polypropylene heterophasic copolymer PP heco 2 (Hifax EP3080, LyondellBasell Industries, MFR 230° C, 2.16 kg 7.5 g/10 min, xylene soluble content 32.0 wt%, intrinsic viscosity of the fraction soluble in xylene at 25°C 3.5 dl/g, ethylene content in a2) 28 wt%, ethylene content in a3) 60 wt%, split a1)/a2)/a3) 60/14/26), and
- 5.4 wt% of a standard additive package constituted by 1.2 wt% of Dioctadecyl 3,3'-thiodipropionate, 0.6 wt% of Irgafos® 168, 0.6 wt% of Irganox® 1010, BASF, 0.9 wt% of talc HM05, 2.1 wt% of TiO2 Tiona 595.

Example 2

The composition was built up with:

- 72.1 wt% of a commercial polypropylene heterophasic copolymer PP heco 1 (Hifax CA 7201A, LyondellBasell Industries, MFR 230° C, 2.16 kg 12.0 g/10 min, xylene soluble content 35.0 wt%, intrinsic viscosity of the fraction soluble in xylene at 25°C 2.3 dl/g, ethylene content in b2) 73 wt%, ethylene content in b3) 45 wt%, split b1)/b2)/b3) 56/23/21), α-olefin: 1-butene,
- 22.5 wt% of a commercial polypropylene heterophasic copolymer PP heco 2 (Hifax EP3080, LyondellBasell Industries, MFR 230° C, 2.16 kg 7.5 g/10 min, xylene soluble content 32.0 wt%, intrinsic viscosity of the fraction soluble in xylene at 25°C 3.5 dl/g, ethylene content in a2) 28 wt%, ethylene content in a3) 60 wt%, split a1)/a2)/a3) 60/14/26), and

- 5.4 wt% of a standard additive package constituted by 1.2 wt% of Dioctadecyl 3,3'-thiodipropionate 0.6 wt% of Irgafos® 168, 0.6 wt% of Irganox® 1010, BASF, 0.9 wt% of talc HM05, 2.1 wt% of TiO2 Tiona 595.

The properties of Examples 1, 2 and Comparative Examples 1 and 2 are reported in Table 1.

Table 1

|  |  | Comp Ex 1 | Comp Ex 2 | Ex 1 | Ex 2 |
|---|---|---|---|---|---|
| Crystalline matrix |  | - | Propylene random copolym. | Propylene homopolym. | Propylene homopolym. |
| MFR | [g/10 min] | 0.3 | 4.2 | 11.8 | 10.9 |
| Density | [g/cm³] | 0.896 | - | 0.914 | 0.915 |
| Tensile stress at yield | [MPa] | 18.0 | - | 16.0 | 14.9 |
| Tensile strain at break | [%] | 350 | - | >400.0 | 90.0 |
| Elongation at break | [%] | - | 538 | 180 | 90 |
| Vicat softening point | [°C] | 130 | 128 | 120.0 | 118.8 |
| Flexural modulus | [MPa] | - | - | 850 | 770 |
| Charpy at -40 °C | [kJ/m²] | - | - | 7.8 | 8.3 |
| Charpy at -30 °C | [kJ/m²] | 6 | - | 13.4 | 11.1 |
| Charpy at -20 °C | [kJ/m²] | 20 | 4 | 55.3 | 14.9 |
| Charpy at -10 °C | [kJ/m²] | - | - | 64.5 | 57.4 |
| Charpy at 0 °C | [kJ/m²] | 50 | 4 | 66.2 | 64.1 |
| Charpy at 23 °C | [kJ/m²] | 70 | 12 | 67.6 | 65.7 |
| Melting temperature | [°C] | 164 | 162 | 161.5 | 162.7 |
| Crystallization temperature | [°C] | - | - | 119.2 | 117.3 |

Based on the results in Table 1, the heterophasic compositions according to the present disclosure show improved impact properties at all the temperatures.

## Claims

1. A polyolefin composition comprising:

   from 2 wt% to 40 wt% of a first heterophasic polyolefin polymer A) comprising:

   a1) a crystalline propylene homopolymer matrix,
   a2) a propylene ethylene copolymer having an ethylene content ranging from 20.0 wt% up to 35.0 wt%,
   a3) a propylene ethylene copolymer having an ethylene content ranging from 55.0 wt% up to 70.0 wt%,

   said first heterophasic polyolefin polymer A) having xylene soluble content measured according to ISO 16152, 2005 ranging from 20.0 wt% to 40.0 wt% and intrinsic viscosity of the xylene soluble fraction at 25 °C ranging from 3.0 wt% to 4.0 wt%,
   and from 60 wt% to 98 wt% of a second heterophasic polyolefin polymer B) comprising:

   b1) a crystalline propylene homopolymer matrix,
   b2) an ethylene $C_4$-$C_{10}$ α-olefin copolymer having an ethylene content ranging from 65.0 wt% up to 85.0 wt%,

b3) a propylene ethylene copolymer having an ethylene content ranging from 40.0 wt% up to 50.0 wt%,

said second heterophasic polyolefin polymer B) having xylene soluble content measured according to ISO 16152, 2005 ranging from 25.0 wt% to 45.0 wt% and intrinsic viscosity of the xylene soluble fraction at 25 °C ranging from 1.5 wt% to 2.8 wt%,
the sum A) + B) being 100.

2. A polyolefin composition according to claim 1 having a MFR (23 °C/5kg ISO 1133) ranging from 5.0 to 30 g/10 min, preferably from 8.0 to 15.0 g/10min.

3. A polyolefin composition according to claim 1 or 2 comprising:

from 5 wt% to 25 wt% of the first heterophasic polyolefin polymer A), and
from 75 wt% to 95 wt% of the a second heterophasic polyolefin polymer B),
the sum A) + B) being 100.

4. A polyolefin composition according to any of claims 1-3 comprising:

from 5 wt% to 20 wt% of the first heterophasic polyolefin polymer A), and
from 80 wt% to 95 wt% of the a second heterophasic polyolefin polymer B),
the sum A) + B) being 100.

5. A polyolefin composition according to any of claims 1-4 wherein the first heterophasic polyolefin polymer A) comprises from 40 wt% to 80 wt%, of component a1), from 5 wt% to 30 wt% of component a2) and from 10 wt% to 50 wt% of component a3), the sum a1) + a2) + a3) being 100.

6. A polyolefin composition according to any of claims 1-5 wherein the second heterophasic polyolefin polymer B) comprises from 40 wt% to 80 wt%, of component b1), from 5 wt% to 40 wt% of component b2) and from 10 wt% to 40 wt% of component b3), the sum b1) + b2) + b3) being 100.

7. A polyolefin composition according to any of claims 1-6 wherein the $\alpha$-olefin of the ethylene $\alpha$-olefin copolymer b2) is 1-butene.

8. A polyolefin composition according to any of claims 1-7 wherein the first heterophasic polyolefin polymer A) has a MFR (230°C/5 kg ISO 1133) ranging from 0.5 g/10 min to 50.0 g/10 min, preferably from 5.0 to 20.0 g/10 min, more preferably from 5.0 to less than 10.0 g/10min.

9. A polyolefin composition according to any of claims 1-8 wherein the second heterophasic polyolefin polymer B) has a MFR (230°C/5 kg ISO 1133) ranging from 0.5 g/10 min to 50.0 g/10 min, preferably from 5.0 to 20.0 g/10 min, more preferably from 10.0 to 15.0 g/10min.

10. The use of a polyolefin composition according to any of claims 1-9 for field joint coating of pipes.

11. A process for producing a joint coating on pipes comprising:

providing a polyolefin composition according to any of claims 1-9, and
producing j oint coating on such pipes.


**Patentansprüche**

1. Polyolefinzusammensetzung, umfassend:

2 Gew.% bis 40 Gew.% eines ersten heterophasigen Polyolefinpolymers A), umfassend:

a1) eine kristalline Polypropylenhomopolymermatrix,
a2) ein Propylen-Ethylen-Copolymer mit einem Ethylengehalt im Bereich von 20,0 Gew.% bis 35,0 Gew.%,
a3) ein Propylen-Ethylen-Copolymer mit einem Ethylengehalt im Bereich von 55,0 Gew.% bis 70,0 Gew.%,

wobei das erste heterophasige Polyolefinpolymer A) einen Gehalt an xylollöslichem Material, gemessen gemäß ISO 16152, 2005, im Bereich von 20,0 Gew.% bis 40,0 Gew.% sowie eine Grenzviskosität der xylollöslichen Fraktion bei 25 °C im Bereich von 3,0 Gew.% bis 4,0 Gew.% hat,
und 60 Gew.% bis 98 Gew.% eines zweiten heterophasigen Polyolefinpolymers B), umfassend:

b1) eine kristalline Polypropylenhomopolymermatrix,
b2) ein Ethylen-$C_4$-$C_{10}$-$\alpha$-Olefincopolymer mit einem Ethylengehalt im Bereich von 65,0 Gew.% bis 85,0 Gew.%,
b3) ein Propylen-Ethylen-Copolymer mit einem Ethylengehalt im Bereich von 40,0 Gew.% bis 50,0 Gew.%,

wobei das zweite heterophasige Polyolefinpolymer B) einen Gehalt an xylollöslichem Material, gemessen gemäß ISO 16152, 2005, im Bereich von 25,0 Gew.% bis 45,0 Gew.% sowie eine Grenzviskosität der xylollöslichen Fraktion bei 25 °C im Bereich von 1,5 Gew.% bis 2,8 Gew.% hat,
wobei die Summe A) + B) 100 beträgt.

2. Polyolefinzusammensetzung nach Anspruch 1 mit einer MFR (23 °C/5kg ISO 1133) im Bereich von 5,0 bis 30 g/10 min, vorzugsweise 8,0 bis 15,0 g/10 min.

3. Polyolefinzusammensetzung nach Anspruch 1 oder 2, umfassend:

5 Gew.% bis 25 Gew.% des ersten heterophasigen Polyolefinpolymers A), und
75 Gew.% bis 95 Gew.% des zweiten heterophasigen Polyolefinpolymers B),
wobei die Summe A) + B) 100 beträgt.

4. Polyolefinzusammensetzung nach einem der Ansprüche 1 bis 3, umfassend:

5 Gew.% bis 20 Gew.% des ersten heterophasigen Polyolefinpolymers A), und
80 Gew.% bis 95 Gew.% des zweiten heterophasigen Polyolefinpolymers B),
wobei die Summe A) + B) 100 beträgt.

5. Polyolefinzusammensetzung nach einem der Ansprüche 1 bis 4, wobei das erste heterophasige Polyolefinpolymer A) 40 Gew.% bis 80 Gew.% von Komponente a1), 5 Gew.% bis 30 Gew.% von Komponente a2) und 10 Gew.% bis 50 Gew.% von Komponente a3) umfasst, wobei die Summe a1) + a2) + a3) 100 ist.

6. Polyolefinzusammensetzung nach einem der Ansprüche 1 bis 5, wobei das zweite heterophasige Polyolefinpolymer B) 40 Gew.% bis 80 Gew.% von Komponente b1), 5 Gew.% bis 40 Gew.% von Komponente b2) und 10 Gew.% bis 40 Gew.% von Komponente b3) umfasst, wobei die Summe b1) + b2) + b3) 100 ist.

7. Polyolefinzusammensetzung nach einem der Ansprüche 1 bis 6, wobei das $\alpha$-Olefin des Ethylen-$\alpha$-Olefin-Copolymers b2) 1-Buten ist.

8. Polyolefinzusammensetzung nach einem der Ansprüche 1 bis 7, wobei das erste heterophasige Polyolefinpolymer A) eine MFR (230 °C/5 kg ISO 1133) im Bereich von 0,5 g/10 min bis 50,0 g/10 min, vorzugsweise von 5,0 bis 20,0 g/10 min, bevorzugter von 5,0 bis weniger als 10,0 g/10 min hat.

9. Polyolefinzusammensetzung nach einem der Ansprüche 1 bis 8, wobei das zweite heterophasige Polyolefinpolymer B) eine MFR (230 °C/5 kg ISO 1133) im Bereich von 0,5 g/10 min bis 50,0 g/10 min, vorzugsweise von 5,0 bis 20,0 g/10 min, bevorzugter von 10,0 bis 15,0 g/10 min hat.

10. Verwendung einer Polyolefinzusammensetzung nach einem der Ansprüche 1 bis 9 für Schweißnahtumhüllung von Rohren.

11. Verfahren zur Herstellung einer Nahtumhüllung auf Rohren, umfassend:

Bereitstellen einer Polyolefinzusammensetzung nach einem der Ansprüche 1 bis 9, und
Herstellen der Nahtumhüllung auf solchen Rohren.

**Revendications**

1. Composition polyoléfinique comprenant :

   2 % en poids à 40 % en poids d'un premier polymère polyoléfinique hétérophasique A) comprenant :

   a1) une matrice d'homopolymère de propylène cristallin,
   a2) un copolymère de propylène-éthylène présentant une teneur en éthylène située dans la plage de 20,0 % en poids jusqu'à 35,0 % en poids,
   a3) un copolymère de propylène-éthylène présentant une teneur en éthylène située dans la plage de 55,0 % en poids jusqu'à 70,0 % en poids,

   ledit premier polymère polyoléfinique hétérophasique A) présentant une teneur soluble dans le xylène mesurée selon la norme ISO 16152, 2005 située dans la plage de 20,0 % en poids à 40,0 % en poids et une viscosité intrinsèque de la fraction soluble dans le xylène à 25 °C située dans la plage de 3,0 % en poids à 4,0 % en poids, et 60 % en poids à 98 % en poids d'un deuxième polymère polyoléfinique hétérophasique B) comprenant :

   b1) une matrice d'homopolymère de propylène cristallin,
   b2) un copolymère d'éthylène-($C_4$-$C_{10}$)-$\alpha$-oléfine présentant une teneur en éthylène située dans la plage de 65,0 % en poids jusqu'à 85,0 % en poids,
   b3) un copolymère de propylène-éthylène présentant une teneur en éthylène située dans la plage de 40,0 % en poids jusqu'à 50,0 % en poids,

   ledit deuxième polymère polyoléfinique hétérophasique B) présentant une teneur soluble dans le xylène mesurée selon la norme ISO 16152, 2005 située dans la plage de 25,0 % en poids à 45,0 % en poids et une viscosité intrinsèque de la fraction soluble dans le xylène à 25 °C située dans la plage de 1,5 % en poids à 2,8 % en poids, la somme A) + B) valant 100.

2. Composition polyoléfinique selon la revendication 1, présentant un MFR (23 °C/5 kg ISO 1133) situé dans la plage de 5,0 à 30 g/10 min, de préférence de 8,0 à 15,0 g/10 min.

3. Composition polyoléfinique selon la revendication 1 ou 2, comprenant :

   5 % en poids à 25 % en poids du premier polymère polyoléfinique hétérophasique A) et
   75 % en poids à 95 % en poids du deuxième polymère polyoléfinique hétérophasique B), la somme A) + B) valant 100.

4. Composition polyoléfinique selon l'une quelconque des revendications 1 à 3, comprenant :

   5 % en poids à 20 % en poids du premier polymère polyoléfinique hétérophasique A) et
   80 % en poids à 95 % en poids du deuxième polymère polyoléfinique hétérophasique B), la somme A) + B) valant 100.

5. Composition polyoléfinique selon l'une quelconque des revendications 1 à 4, le premier polymère polyoléfinique hétérophasique A) comprenant 40 % en poids à 80 % en poids du constituant a1), 5 % en poids à 30 % en poids du constituant a2) et 10 % en poids à 50 % en poids du constituant a3), la somme a1) + a2) + a3) valant 100.

6. Composition polyoléfinique selon l'une quelconque des revendications 1 à 5, le deuxième polymère polyoléfinique hétérophasique B) comprenant 40 % en poids à 80 % en poids du constituant b1), 5 % en poids à 40 % en poids du constituant b2) et 10 % en poids à 40 % en poids du constituant b3), la somme b1) + b2) + b3) valant 100.

7. Composition polyoléfinique selon l'une quelconque des revendications 1 à 6, l'a-oléfine du copolymère d'éthylène-$\alpha$-oléfine b2) étant le 1-butène.

8. Composition polyoléfinique selon l'une quelconque des revendications 1 à 7, le premier polymère polyoléfinique hétérophasique A) présentant un MFR (230 °C/5 kg ISO 1133) situé dans la plage de 0,5 g/10 min à 50,0 g/10 min, de préférence de 5,0 à 20,0 g/10 min, plus préférablement de 5,0 à moins de 10,0 g/10 min.

9. Composition polyoléfinique selon l'une quelconque des revendications 1 à 8, le deuxième polymère polyoléfinique hétérophasique B) présentant un MFR (230 °C/5 kg ISO 1133) situé dans la plage de 0,5 g/10 min à 50,0 g/10 min, de préférence de 5,0 à 20,0 g/10 min, plus préférablement de 10,0 à 15,0 g/10 min.

10. Utilisation d'une composition polyoléfinique selon l'une quelconque des revendications 1 à 9 pour le revêtement de joints de tuyaux sur le terrain.

11. Procédé de production d'un revêtement de joints sur des tuyaux comprenant :

la fourniture d'une composition polyoléfinique selon l'une quelconque des revendications 1 à 9 et
la production d'un revêtement de joints sur de tels tuyaux.

**REFERENCES CITED IN THE DESCRIPTION**

**Patent documents cited in the description**

- WO 2015090594 A